**Europäisches Patentamt**

**European Patent Office**

**Office européen des brevets**

(19)

(11) Veröffentlichungsnummer: **0 012 398**
**B1**

(12) # EUROPÄISCHE PATENTSCHRIFT

(45) Veröffentlichungstag der Patentschrift:
**17.02.82**

(21) Anmeldenummer: **79105011.5**

(22) Anmeldetag: **08.12.79**

(51) Int. Cl.³: **F 27 B 7/22**

(54) **Drehtrommel.**

(30) Priorität: **11.12.78 DE 2853435**

(43) Veröffentlichungstag der Anmeldung:
**25.06.80 Patentblatt 80/13**

(45) Bekanntmachung des Hinweises auf die Patenterteilung:
**17.02.82 Patentblatt 82/7**

(84) Benannte Vertragsstaaten:
**BE DE FR GB**

(56) Entgegenhaltungen:
**DE-A-2 011 244**
**FR-A-2 180 319**
**FR-A-2 273 454**

(73) Patentinhaber: **Krupp Polysius AG,**
**Graf-Galen-Strasse 17, D-4720 Beckum (DE)**

(72) Erfinder: **Körting, Reinhard,**
**Amtmann-Brüning-Strasse 23A, D-4722 Ennigerloh (DE)**

(74) Vertreter: **Tetzner, Volkmar, Dr.-Ing. Dr. Jur.,**
**Van-Gogh-Strasse 3, D-8000 München 71 (DE)**

Drehtrommel

Die Erfindung betrifft eine Drehtrommel mit lose auf dem Trommelmantel vorgesehenem Laufring sowie mit zwischen Trommelmantel und Laufring angeordneten Unterlagblechen, die in axialer Richtung und in Umfangsrichtung des Trommelmantels gesichert, jedoch wenigstens in axialer Richtung gegenüber dem Laufring und/oder dem Trommelmantel begrenzt beweglich sind, wobei auf jedem Unterlagblech ein zur axialen Lagesicherung dieses Unterlagbleches in der einen Richtung dienendes, mit dem Laufring zusammenwirkendes Arretierelement angeordnet ist und auf dem Trommelmantel zur Sicherung des Unterlagbleches in Umfangsrichtung dienende Arretierelemente vorgesehen sind.

Bei einer bekannten Ausführung der vorstehend genannten Art (FR-A-2 273 454) erfolgt die axiale Lagesicherung der einzelnen Unterlagbleche in der Weise, daß auf dem einen Ende des Unterlagbleches das vorstehend bereits erwähnte, mit dem Laufring zusammenwirkende Arretierelement angeordnet ist, während das andere Ende dieses Unterlagbleches mit dem Trommelmantel verschweißt ist. Da das Unterlagblech nur an einem Ende durch die Schweißverbindung mit dem Ofenmantel starr festgelegt ist, kann es sich im übrigen in axialer Richtung gegenüber dem Trommelmantel und dem Laufring ausdehnen.

Nun ist es allerdings von Zeit zu Zeit erforderlich, derartige Unterlagbleche auszuwechseln (beispielsweise um Wartungsarbeiten am Laufring durchzuführen oder um den Sitz des Laufringes etwaigen Verformungen oder Verschleißerscheinungen anzupassen). Bei der vorstehend erläuterten bekannten Ausführung muß zum Auswechseln der Unterlagbleche ihre Schweißverbindung mit dem Trommelmantel gelöst werden. Derartige nachträgliche Schweißarbeiten am Trommelmantel sind jedoch verhältnismäßig aufwendig und aus den verschiedensten Gründen unerwünscht.

Der Erfindung liegt daher die Aufgabe zugrunde, unter Vermeidung dieser Nachteile eine Drehtrommel der eingangs genannten Art so auszubilden, daß ein Auswechseln der Unterlagbleche ohne Lösen einer Schweißverbindung zwischen Unterlagblech und Trommelmantel und ohne Lösen eines am Trommelmantel befestigten Arretierelementes möglich ist.

Diese Aufgabe wird erfindungsgemäß dadurch gelöst, daß zur axialen Lagesicherung des Unterlagbleches in der anderen Richtung ein auf dem Trommelmantel angeordnetes und mit der Stirnkante des Unterlagbleches zusammenwirkendes Arretierelement vorgesehen ist, das im Bereich desselben Endes des Unterlagbleches wie das zur axialen Lagesicherung des Unterlagbleches in der erstgenannten Richtung dienende Arretierelement angeordnet ist.

Da bei der erfindungsgemäßen Ausführung beide zur axialen Lagesicherung des Unterlagbleches dienenden Arretierelemente im Bereich desselben Endes dieses Unterlagbleches angeordnet sind (wobei das eine Arretierelement auf dem Trommelmantel und das andere auf dem Unterlagblech sitzt), braucht zum Zwecke des Auswechselns dieses Unterlagbleches lediglich das eine Arretierelement (nämlich das auf dem Unterlagblech angeordnete, mit dem Laufring zusammenwirkende Arretierelement) gelöst zu werden. Ein Lösen des auf dem Trommelmantel angeordneten Arretierelement ist demgegenüber nicht erforderlich. Es gibt ferner auch keine Schweißverbindung zwischen dem Unterlagblech und dem Trommelmantel, die gelöst werden müßte.

Zweckmäßige Ausgestaltungen der Erfindung sind Gegenstand der Unteransprüche und werden im Zusammenhang mit der Beschreibung einiger in der Zeichnung veranschaulichter Ausführungsbeispiele näher erläutert.

In der Zeichnung zeigt

Fig. 1 eine Teil-Querschnittsansicht durch eine erfindungsgemäße Drehtrommel im Bereich eines losen Laufringes (Schnittführung entsprechend Linie I-I in Fig. 2),

Fig. 2 eine Teil-Aufsicht auf die Drehtrommel im Bereich des Laufringes (vgl. Pfeil II in Fig. 1),

Fig. 3 eine Schnittansicht entlang der Linie III-III in Fig. 2,

Fig. 4 bis 8 ganz schematisch gehaltene Aufsichten von fünf verschiedenen weiteren Möglichkeiten zur Ausbildung und Anordnung der losen Unterlagbleche zwischen Trommelmantel und Laufring.

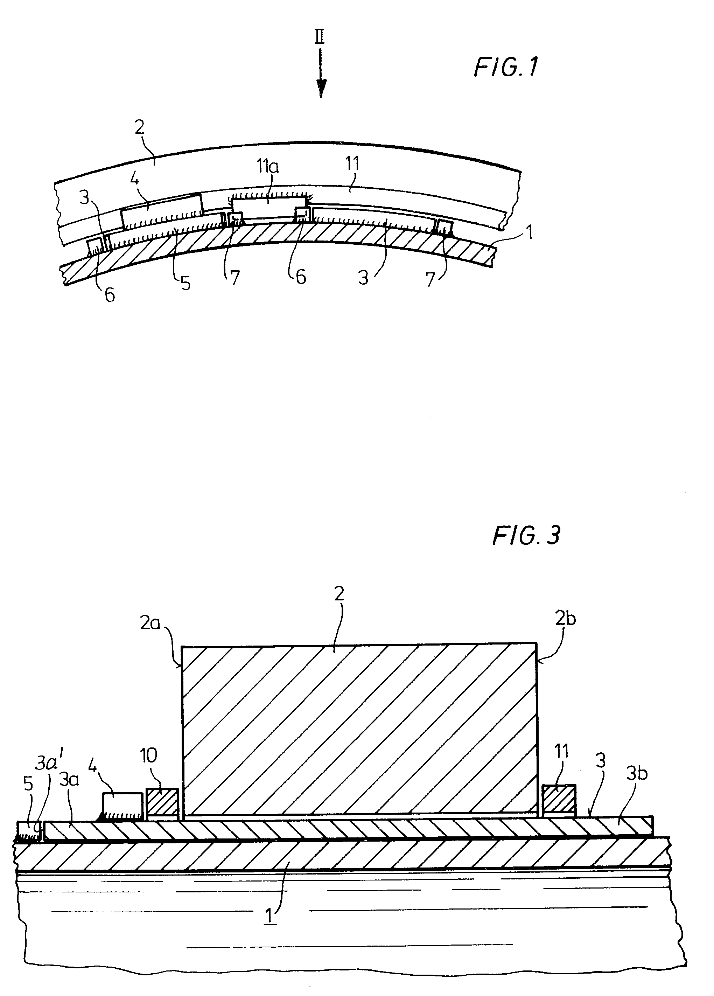

Ein erstes Ausführungsbeispiel der erfindungsgemäß ausgebildeten Drehtrommel ist in den Fig. 1 bis 3 etwas ausführlicher veranschaulicht; von der Drehtrommel selbst ist der Einfachheit halber lediglich ein Teil des Trommelmantels 1 gezeigt.

Auf der Außenseite des Trommelmantels 1 ist ein sog. loser Laufring 2 angeordnet, d. h. dieser Laufring 2 besitzt gegenüber dem Trommelmantel 1 ein gewisses Spiel, wodurch er insbesondere in Umfangsrichtung gegenüber dem Trommelmantel 1 beweglich ist.

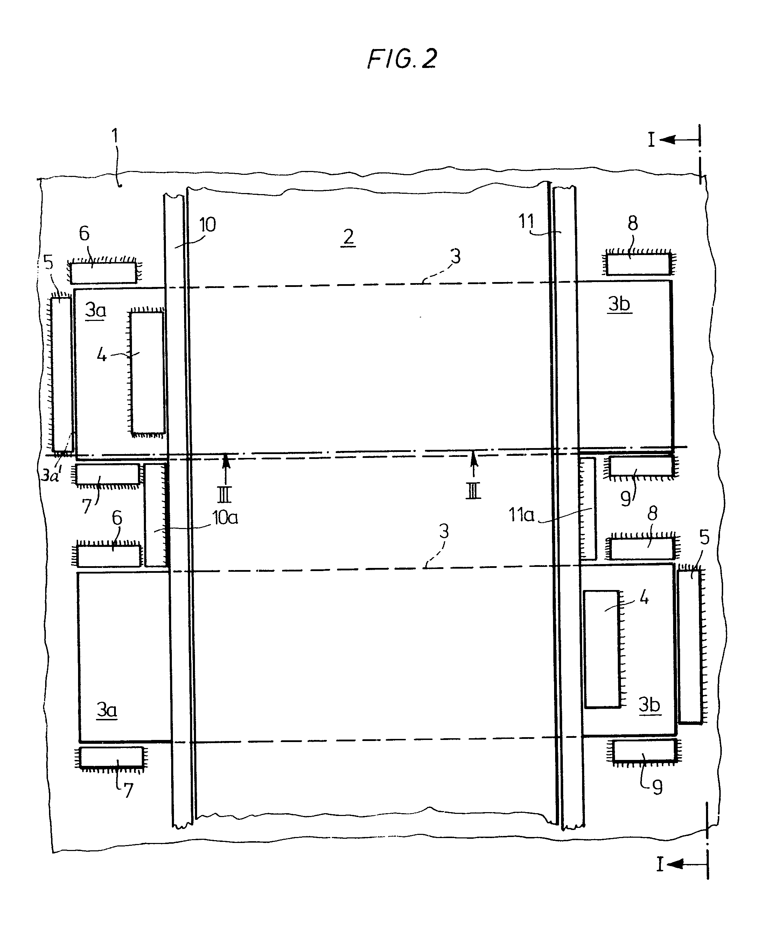

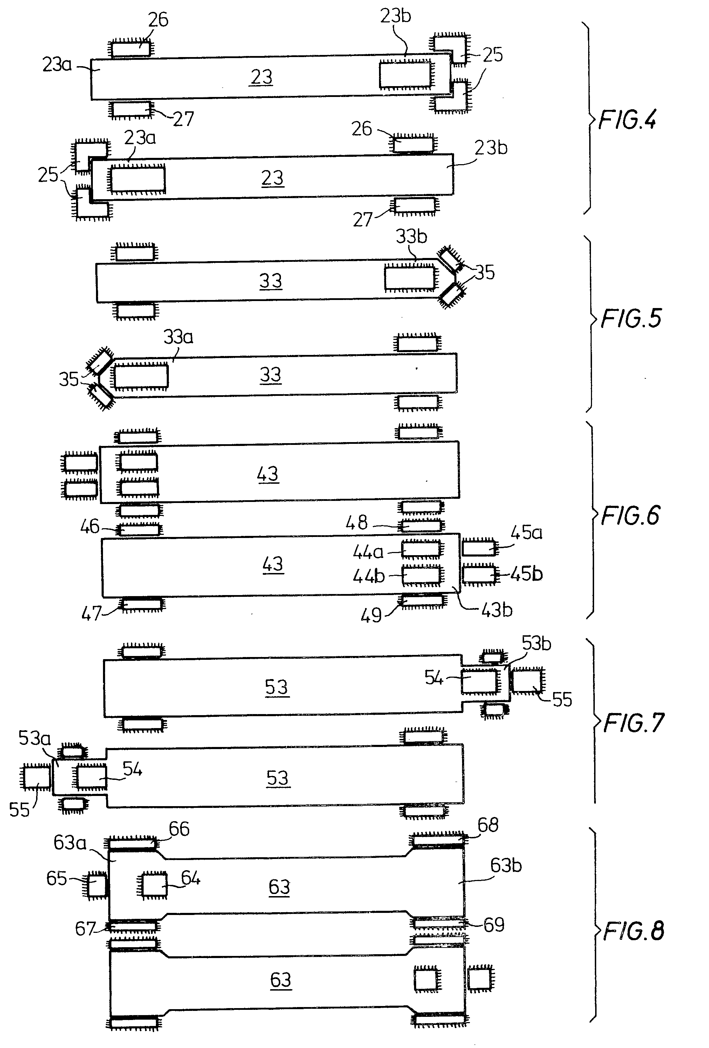

Zwischen dem Trommelmantel 1 und dem Laufring 2 ist eine Anzahl von losen Unterlagblechen 3 vorgesehen, die in Umfangsrichtung des Trommelmantels 1 mit gleichen Abständen voneinander unter dem Laufring 2 sowohl in axialer Richtung als auch in Umfangsrichtung des Trommelmantels 1 so gehaltert sind, daß sie insbesondere in axialer Richtung gegenüber dem Laufring 2 und dem Trommelmantel 1 begrenzt beweglich sind. Zu diesem Zweck sind vor allem zwei zur axialen Lagesicherung eines Unterlagbleches 3 dienende Arretierelemente 4 bzw. 5 im Bereich desselben Unterlagblechendes, z. B. 3a, vorgesehen (vgl. insbes. Fig. 2 und 3). Bei der Anordnung dieser Axial-Arretiere-

mente 4, 5 ist es wichtig, daß das eine Arretierelement 5 auf dem Trommelmantel 1 so befestigt, vorzugsweise angeschweißt ist, daß es der Stirnkante, z. B. 3a', dieses Unterlagblechendes, z. B. 3a, gegenüberliegt und mit dieser zusammenwirkt, während das zweite Arretierelement 4 auf der Oberseite dieses Unterlagblechendes, z. B. 3a, so befestigt, vorzugsweise aufgeschweißt ist, daß es mit der ihm zugewandten Stirnseite 2a des Laufringes 2 zusammenwirken kann. Das diesem erwähnten Unterlagblechende, z. B. 3a, entgegengesetzte Ende, z. B. 3b, des Unterlagbleches 3 ist dagegen vollkommen frei von Axial-Arretierelementen, so daß sich jedes Unterlagblech 3 in Richtung seines axial nicht arretierbaren Endes, z. B. 3b, frei ausdehnen kann. Es sei in diesem Zusammenhang darauf hingewiesen, daß es vorteilhaft ist, bei den in Umfangsrichtung des Trommelmantels 1 einander benachbarten Unterlagblechen 3 die Arretierelemente 4, 5 zur axialen Lagesicherung jeweils auf entgegengesetzten Enden der Unterlagbleche vorzusehen. Dies läßt sich in Fig. 2 deutlich erkennen, wo die Axial-Arretierelemente 4, 5 des — in der Zeichnung — oberen Unterlagbleches 3 im Bereich des linken Unterlagblechendes 3a und bei dem darunterliegenden — also in Umfangsrichtung benachbarten — Unterlagblech 3 im Bereich des rechten Unterlagblechendes 3b angeordnet sind. Hierdurch wird auf besonders günstige Weise auch der lose Laufring 2 in axialer Richtung des Trommelmantels mit ausreichendem Spiel festgelegt.

Bei der Sicherung der losen Unterlagbleche 3 ist es jedoch ferner von Vorteil, wenn diese auch in Umfangsrichtung des Trommelmantels 1 in ihrer Lage gesichert sind. Zu diesem Zweck sind — vgl. insbesondere Fig. 2 — im Bereich beider Enden 3a, 3b jedes Unterlagbleches 3 weitere Arretierelemente 6, 7, 8, 9 auf dem Trommelmantel 1 befestigt. Bei diesen weiteren Arretierelementen 6 bis 9 kann es sich ebenfalls um ganz einfach ausgebildete Klötze handeln. Diese vier weiteren Arretierelemente 6 bis 9 für die Lagesicherung der Unterlagbleche 3 in Umfangsrichtung des Trommelmantels sind dabei so auf dem Trommelmantel 1 befestigt, vorzugsweise wiederum angeschweißt, daß zwischen ihnen und den zugehörigen Längsseiten der jeweiligen Unterlagblechenden 3a, 3b ein ausreichendes Spiel zur Aufnahme von betriebsbedingten Dehnungsänderungen der Unterlagbleche 3 in Umfangsrichtung vorhanden ist, wie dies ganz besonders deutlich aus Fig. 2 hervorgeht.

Generell ist es natürlich möglich, daß die auf den Unterlagblechen 3 befestigten Axial-Arretierelemente 4 direkt mit den ihnen zugewandten Stirnseiten 2a bzw. 2b des Laufringes zusammenwirken. Da der Laufring 2 jedoch aufgrund seines Spiels eine Relativbewegung zum Trommelmantel 1 und damit zu den Unterlagblechen 3 und den Arretierelementen 4 ausführt, ist man bestrebt, den durch die axialen Begrenzungen auftretenden Verschleiß an beiden Stirnseiten des Laufringes 2 sowie auch an den Arretierelementen 4 so klein wie möglich zu halten. Aus diesem Grunde ist zweckmäßig zu beiden Stirnseiten 2a, 2b des Laufringes 2 ein Begrenzungsring 10 bzw. 11 vorgesehen, der jeweils zwischen dem mit dem Laufring 2 zusammenwirkenden Axial-Arretierelement jedes Unterlagbleches 3 und der zugehörigen Laufring-Stirnseite angeordnet ist und einen deutlich kleineren Außendurchmesser als der Laufring 2 sowie gegenüber den Unterlagblechen 3 ein geringes Spiel besitzt (vgl. Fig. 2 und 3).

Damit jeder Begrenzungsring 10, 11 gegen Verdrehung in Umfangsrichtung des Trommelmantels 1 gesichert ist, weist er wenigstens ein Halteelement 10a bzw. 11a auf, das durch eine kleine Platte gebildet und am Begrenzungsring angeschweißt sein kann und dabei zahnartig und mit Spiel zwischen zwei in Umfangsrichtung benachbarte Unterlagbleche 3 greift.

Wie sich insbesondere aus Fig. 3 ersehen läßt, können zumindest die auf dem Trommelmantel 1 aufgeschweißten Arretierelemente 5 bis 9 eine Höhe besitzen, die etwa der Dicke der Unterlagbleche 3 entspricht. Ferner besteht auch die Möglichkeit, sämtliche Arretierelemente 4 bis 9, also auch die auf den Unterlagblechen 3 aufgeschweißten Arretierelemente 4 gleichartig auszubilden, was sich besonders für die Herstellung und Lagerhaltung dieser Arretierelemente vorteilhaft auswirkt.

Bei diesem in den Fig. 1 bis 3 veranschaulichten ersten Ausführungsbeispiel sind die Unterlagbleche alle gleich groß sowie mit rechteckiger Grundfläche und gleich bleibender Dicke ausgeführt (vgl. Fig. 2 und 3).

Neben den bereits eingangs erläuterten Vorteilen dieser erfindungsgemäßen Ausführung sei noch auf einen weiteren wichtigen Vorteil hingewiesen: Wird beispielsweise aufgrund von Abnutzungserscheinungen od. dgl. eine Verringerung des Spieles zwischen losem Laufring und Trommelmantel bzw. den Unterlagblechen erforderlich, dann genügt es bei dieser erfindungsgemäßen Ausführungsform in vielen Fällen bereits, wenn von dem Unterlagblechende her, in dessen Bereich keine Axial-Arretierelemente (4, 5) vorgesehen sind, Ausgleichsbleche mit entsprechender Dicke in axialer Richtung zwischen den Trommelmantel 1 und die Unterlagbleche 3 geschoben werden. Diese Ausgleichsbleche werden dann evtl. lediglich mit den zugehörigen Unterlagblechen verschweißt, so daß auch hierdurch keinerlei Beeinträchtigung der Haltbarkeit des Trommelmantels in Kauf genommen werden muß. In diesem Falle brauchen also nicht einmal die Unterlagbleche 3 ausgewechselt zu werden.

Im Rahmen der Erfindung sind selbstverständlich zahlreiche Abwandlungen der anhand der Fig. 1 bis 3 erläuterten Ausführungsformen möglich. Einige weitere Beispiele für die Ausbildung und Anordnung von Unterlagblechen und Arretierelementen seien im folgenden anhand der ganz vereinfachten Darstellungen der Fig. 4 bis 8 erläutert; bei diesen Fig. 4 bis 8 handelt es sich um schematische Aufsichten lediglich auf je zwei in Umfangsrichtung benachbarte lose Unterlagbleche mit zugehörigen Arretierelementen, also um Aufsichten, die mit Fig. 2 vergleichbar sind, jedoch unter Weglassung von Trommelmantel, Laufring und Begrenzungsringen.

Bei der Ausführungsform gemäß Fig. 4 können die Unterlagbleche 23 im Grundriß ebenfalls vollkommen rechteckig ausgeführt sein und eine durchgehend gleich große Dicke besitzen. Der wesentliche Unterschied gegenüber dem ersten Ausführungsbeispiel gemäß den Fig. 1 bis 3 besteht im Falle der Fig. 4 darin, daß auf dem — hier nicht dargestellten — Trommelmantel zwei Arretierelemente 25 zur axialen Lagesicherung der Unterlagbleche 23 vorgesehen sind und diese Arretierelemente 25 winkelförmig ausgebildet und so angeordnet sind, daß sie an den entsprechenden Ecken der zugehörigen Unterlagblechenden 23a bzw. 23b gleichzeitig die im Bereich dieser Unterlagblechenden 23a bzw. 23b vorgesehenen Arretierelemente für die Lagesicherung in Umfangsrichtung bilden. Die diesen Unterlagblechenden 23b, 23a jeweils entgegengesetzten Unterlagblechenden 23a bzw. 23b, an denen keine Axial-Arretierelemente vorgesehen sind, können dann wiederum in gleicher Weise wie beim ersten Ausführungsbeispiel durch einfache, blockförmige Arretierelemente 26, 27 gesichert sein, die im Bereich dieser Enden den Längsseiten der Unterlagbleche 23 zugeordnet und am Trommelmantel angeschweißt sind.

Auch beim dritten Ausführungsbeispiel gemäß Fig. 5 dienen die zur axialen Lagesicherung der Unterlagbleche 33 auf dem Trommelmantel befestigten Arretierelemente 35 — ähnlich wie beim Beispiel der Fig. 4 — gleichzeitig für die Lagesicherung der Unterlagbleche 33 in Umfangsrichtung des Trommelmantels. Die zu diesem Zweck an dem entsprechenden Unterlagblechende 33b bzw. 33a vorgesehenen beiden Arretierelemente 35 können als einfache Klötze ausgebildet und schräg (beispielsweise unter einem Winkel von 45°) gegenüber dem zugehörigen Unterlagblech 33 angeordnet sein, wozu dessen zugehöriges Ende 33b in Anpassung an diese Arretierelemente 35 an seinen Ecken entsprechend schräg abgeschnitten ist.

Beim Beispiel der Fig. 6 sind ebenfalls vollkommen rechteckige Unterlagbleche 43 vorgesehen, und auch die Lagesicherung dieser Unterlagbleche 43 in Umfangsrichtung des Trommelmantels kann in gleicher Weise mit einfachen Arretierelementen 46, 47, 48, 49 erfolgen, wie beim Beispiel der Fig. 1 bis 3. Der Unterschied zu diesem ersten Ausführungsbeispiel besteht in Fig. 6 darin, daß die beiden zur axialen Lagesicherung eines Unterlagbleches 43 vorhandenen Arretierelemente (im Bereich ein und desselben Unterlagblechendes, z. B. 43b) jeweils verdoppelt sind, d. h. mit der Stirnkante des zugehörigen Unterlagblechendes, z. B. 43b, wirken zwei Arretierelemente 45a, 45b zusammen, die auf dem Trommelmantel befestigt sind, während mit dem Laufring zwei Arretierelemente 44a und 44b zusammenwirken, die auf dem entsprechenden Unterlagblechende, z. B. 43b, befestigt sind. Eine solche Sicherungsart bietet sich beispielsweise bei großen Drehtrommeln mit verhältnismäßig breiten Unterlagblechen an.

In Fig. 7 ist ein Ausführungsbeispiel veranschaulicht, bei dem die Unterlagbleche 53 jeweils im Bereich des Unterlagblechendes 53b bzw. 53a, in dessen Bereich die zur axialen Lagesicherung des Unterlagbleches 53 dienenden Arretierelemente 54, 55 angeordnet sind, etwas schmaler ausgeführt sind als der übrige Teil des Unterlagbleches 53, wobei also nur das unter dem Laufring herausragende Ende schmaler ausgeführt ist. Auf jeden Fall muß dann jedoch das jeweils entgegengesetzte Ende wenigstens genauso breit ausgeführt sein wie der Hauptteil des Unterlagbleches 53 (s. Zeichnung).

Wie Fig. 8 zeigt, ist es jedoch auch möglich, die Unterlagbleche 63 so auszuführen, daß sie an ihren Enden 63a und 63b zumindest gegenüber dem unter dem Laufring befindlichen Abschnitt verbreitert sind. Hierbei werden dann den Längsseiten dieser verbreiterten Enden die Arretierelemente 66, 67, 68, 69 zugeordnet, die zur Lagesicherung des Unterlagbleches 63 in Umfangsrichtung des Trommelmantels dienen. Die zur axialen Lagesicherung der Unterlagbleche 63 dienenden Arretierelemente 64, 65 können ansonsten genauso ausgebildet und angeordnet sein wie beim Beispiel der Fig. 1 bis 3.

Die Besonderheiten der beiden zuletzt erläuterten Ausführungsbeispiele (Fig. 7 und 8) sind darin zu sehen, daß sich in diesen Fällen die Ausgleichsbleche besonders gut unter die Unterlagbleche schieben lassen, wobei zu bedenken ist, daß die Ausgleichsbleche möglichst die gleiche Tragbreite (unterhalb des Laufringes) besitzen sollten wie die Unterlagbleche selbst.

**Patentansprüche**

1. Drehtrommel mit lose auf dem Trommelmantel (1) vorgesehenen Laufring (2) sowie mit zwischen Trommelmantel (1) und Laufring (2) angeordneten Unterlagblechen (3), die in axialer Richtung und in Umfangsrichtung des Trommelmantels (1) gesichert, jedoch wenigstens in axialer Richtung gegenüber dem Laufring (2) und/oder dem Trommelmantel (1) begrenzt beweglich sind, wobei auf jedem Unterlagblech (3) ein zur axialen Lagesicherung dieses Unterlagbleches (3) in der einen Richtung dienendes, mit dem Laufring (2) zusammenwirkendes Arretierelement (4) angeordnet ist und auf dem Trommelmantel (1) zur Sicherung des Unterlagbleches (3) in Umfangsrichtung dienende Arretierelemente (6, 7, 8, 9) vorgesehen sind, dadurch gekennzeichnet, daß zur axialen Lagesicherung des Unterlagbleches (3) in der anderen Richtung ein auf dem Trommelmantel (1) angeordnetes und mit der Stirnkante (3a') des Unterlagbleches (3) zusammenwirkendes Arretierelement (5) vorgesehen ist, das im Bereich desselben Endes (3a bzw. 3b) des Unterlagbleches (3) wie das zur axialen Lagesicherung des Unterlagbleches (3) in der erstgenannten Richtung dienende Arretierelement (4) angeordnet ist.

2. Drehtrommel nach Anspruch 1, dadurch gekennzeichnet, daß bei in Umfangsrichtung des Trommelmantels (1) einander benachbarten Unterlagblechen (3) die zur axialen Lagesicherung dienenden Arretierelemente (4, 5) jeweils an entgegengesetzten Enden (3a, 3b) der Unterlagbleche (3) vorgesehen sind.

3. Drehtrommel nach Anspruch 1, dadurch gekennzeichnet, daß die zur Lagesicherung der Unterlagbleche (3) in Umfangsrichtung des Trommelmantels (1) dienenden vier Arretierelemente (6, 7, 8, 9) so auf dem Trommelmantel (1) befestigt sind, daß zwischen ihnen und den zugehörigen Längsseiten der Unterlagbleche (3) ein ausreichendes Spiel zur Aufnahme von betriebsbedingten Dehnungsänderungen der Unterlagbleche vorhanden ist.

4. Drehtrommel nach Anspruch 1 oder 2, dadurch gekennzeichnet, daß die zur axialen Lagesicherung der Unterlagbleche (23; 33) auf dem Trommelmantel (1) vorgesehenen Arretierelemente (25; 35) so ausgebildet und angeordnet sind, daß sie gleichzeitig die im Bereich dieser Unterlagblechenden (23b bzw. 23a; 33b bzw. 33a) vorgesehenen, zur Lagesicherung in Umfangsrichtung dienenden Arretierelemente bilden.

5. Drehtrommel nach Anspruch 4, dadurch gekennzeichnet, daß die auf dem Trommelmantel (1) befestigten, zur axialen Lagesicherung dienenden Arretierelemente (25) die Ecken der zugehörigen Unterlagblechenden (23b bzw. 23a) umgreifen.

6. Drehtrommel nach den Ansprüchen 1 und 2, dadurch gekennzeichnet, daß zu beiden Seiten des Laufringes (2) ein Begrenzungsring (10, 11) vorgesehen ist, der zwischen dem zur axialen Lagesicherung des Laufringes (2) dienenden, auf dem Unterlagblech (3) angeordneten Arretierelement (4) und der zugehörigen Laufring-Stirnseite (2a bzw. 2b) angeordnet ist und einen kleineren Außendurchmesser als der Laufring (2) sowie gegenüber den Unterlagblechen (3) ein geringes Spiel besitzt.

7. Drehtrommel nach Anspruch 6, dadurch gekennzeichnet, daß jeder Begrenzungsring (10, 11) für seine Lagesicherung in Umfangsrichtung wenigstens ein Halteelement (10a bzw. 11a) aufweist, das zahnartig und mit Spiel zwischen zwei in Umfangsrichtung benachbarte Unterlagbleche (3) greift.

8. Drehtrommel nach einem der vorhergehenden Ansprüche, dadurch gekennzeichnet, daß alle auf dem Trommelmantel (1) befestigten Arretierelemente (5 bis 9) eine Höhe besitzen, die etwa der Dicke der Unterlagbleche (3) entspricht.

9. Drehtrommel nach einem der vorhergehenden Ansprüche, dadurch gekennzeichnet, daß die Unterlagbleche (3) zumindest im Bereich unter dem Laufring (2) eine rechteckige Grundfläche und eine gleichbleibende Dicke besitzen.

10. Drehtrommel nach Anspruch 9, dadurch gekennzeichnet, daß die Unterlagbleche (63) an ihren Enden (63a, 63b) gegenüber dem unter dem Laufring befindlichen Abschnitt verbreitert sind, wobei den Längsseiten dieser Verbreiterungen die zur Lagesicherung in Umfangsrichtung dienenden Arretierelemente (66 bis 69) zugeordnet sind.

11. Drehtrommel nach Anspruch 9, dadurch gekennzeichnet, daß das Ende (53b bzw. 53a) jedes Unterlagbleches (53), in dessen Bereich die zur axialen Lagesicherung dienenden Arretierelemente (54, 55) vorgesehen sind, schmaler als der übrige Teil des Unterlagbleches ausgeführt ist.

12. Drehtrommel nach einem der vorhergehenden Ansprüche, dadurch gekennzeichnet, daß Ausgleichsbleche von den Unterlagblechenden her, die den zur axialen Lagesicherung dienenden Arretierelementen gegenüberliegen, unter die Unterlagbleche einschiebbar und an diesen befestigbar sind.

**Claims**

1. Rotary drum having a bearing race (2) provided on the drum surface (1) and spacers or shims (3) disposes between the drum surface (1) and the bearing race (2) and secured the axial direction and in the peripheral direction of the drum surface (1) but limitedly movable at least in the axial direction with respect to the bearing race (2) and/or the drum surface (1), an arresting member (4) cooperating with the bearing race (2) being provided on each spacer (3) serving for axial location of said spacer (3) in the one direction and arresting members (6, 7, 8, 9) being provided on the drum surface (1) and serving for securing the spacer (3) in the peripheral direction, characterised in that for the axial locating of the spacer (3) in the other direction an arresting member (5) is provided which is disposed on the drum surface (1) and cooperates with the end edge (3a') of the spacer (3) and which is disposed in the region of the same end (3a, 3b) of the spacer (3) as the arresting member (4) serving for the axial location of the spacer (3) in the first mentioned direction.

2. Rotary drum according to claim 1, characterised in that with spacers (3) adjacent each other in the peripheral direction of the drum surface (1) the arresting members (4, 5) serving for the axial locating are provided in each case at opposite ends (3a, 3b) of the spacers (3).

3. Rotary drum according to claim 1, characterised in that the four arresting members (6, 7, 8, 9) serving for location of the spacers (3) in the peripheral direction of the drum surface (1) are secured on the drum surface (1) in such a manner that between them and the associated longitudinal sides of the spacers (3) an adequate play is present for taking up expansion changes of the spacers due to operation.

4. Rotary drum according to claim 1 or 2, characterised in that the arresting members (25; 35) provided for the axial locating of the spacers (23, 33) on the drum surface (1) are so constructed and arranged that they simultaneously form the arresting members provided in the region of said spacer ends (23b, 23a; 33b, 33a) and serving for the location in the peripheral direction.

5. Rotary drum according to claim 4, characterised in that the arresting members (25) secured to the drum surface (1) and serving for the axial locating engage round the corners of the associated spacer ends (23b, 23a).

6. Rotary drum according to claims 1 and 2, characterised in that on both sides of the bearing race (2) a limiting ring (10, 11) is provided which is disposed between the arresting member (4) serving for axial location of the bearing race (2) and disposed on the spacer (3) and the associated bearing race end side (2a, 2b) and has a smaller external diameter than the bearing race (2) and a slight clearance with respect to the spacers (3).

7. Rotary drum according to claim 6, characterised in that each limithing ring (10, 11) for its location in the peripheral direction has at least one retaining member (10a, 11a) which engages toothlike and with clearance between two spacers (3) adjacent in the peripheral direction.

8. Rotary drum according to any one of the preceding claims, characterised in that all the arresting members (5 to 9) secured on the drum surface (1) have a height substantially corrresponding to the thickness of the spacer (3).

9. Rotary drum according to any one of the preceding claims, characterised in that the spacers (3) have at least in the region beneath the bearing race (2) a rectangular base area and a constant thickness.

10. Rotary drum according to claim 9, characterised in that the spacers (63) are widened at their ends (63a, 63b) with respect to the portion disposed beneath the bearing race, the longitudinal sides of said widenings having associated therewith the arresting members (66 to 69) serving for the location in the peripheral direction.

11. Rotary drum according to claim 9, characterised in that the end (53b, 53a) of each spacer (53) in whose region the arresting members (54, 55) serving for the axial location are provided is narrower than the remaining portion of the spacer.

12. Rotary drum according to any one of the preceding claims, characterised in that compensating metal shims can be inserted beneath the spacers from the ends thereof opposite the arresting members serving the axial location and are securable to said spacers.

## Revendications

1. Tambour rotatif à bague de roulement (2) montée folle sur l'enveloppe (1) du tambour et à tôles d'appui (3) disposées entre cette enveloppe (1) et la bague de roulement (2) et retenues dans la direction de l'axe et dans la direction de la circonférence de l'enveloppe (1) du tambour, mais mobiles de manière limitée au moins dans la direction de l'axe par rapport à la bague de roulement (2) et/ou par rapport à l'enveloppe (1) du tambour, un élément d'arrêt (4) disposé sur chaque tôle d'appui (3) étant destiné à la retenue en position de cette tôle d'appui (3) dans la direction de l'axe dans un sens et coopérant avec la bague de roulement (2) et des éléments d'arrêt (6, 7, 8, 9) étant prévus sur l'enveloppe (1) du tambour pour la retenue de la tôle d'appui (3) dans la direction de la circonférence, caractérisé en ce qu'un élément d'arrêt (5) destiné à la retenue en position de la tôle d'appui (3) dans la direction de l'axe dans l'autre sens est disposé sur l'enveloppe (1) du tambour et coopère avec le bord extrême (3a') de cette tôle (3), cet élément d'arrêt (5) étant placé au voisinage de la même extrémité (3a, 3b) de la tôle d'appui (3) que celle à laquelle se trouve l'élément d'arrêt (4) destiné à la retenue en position de la tôle d'appui (3) dans la direction de l'axe dans le premier sens mentionné.

2. Tambour rotatif selon la revendication 1, caractérisé en ce que les éléments d'arrêt (4, 5) destinés à la retenue axiale en position des tôles d'appui (3) qui sont voisines les unes des autres à la circonférence de l'enveloppe (1) du tambour sont placés en alternance aux extrémités opposées (3a, 3b) de ces tôles (3).

3. Tambour rotatif selon la revendication 1, caractérisé en ce que les quatre éléments d'arrêt (6, 7, 8, 9) distinés à la retenue en position des tôles d'appui (3) dans la direction de la circonférence de l'enveloppe (1) du tambour sont fixés sur cette dernière de manière qu'un jeu suffisant subsiste entre eux et les côtés correspondants longs des tôles (3) pour absorber les variations de dilatation de ces tôles apparaissant en service.

4. Tambour rotatif selon la revendication 1 ou la revendication 2, caractérisé en ce que les éléments d'arrêt (25; 35) prévus sur l'enveloppe (1) du tambour et destinés à la retenue en position des tôles d'appui (23; 33) dans la direction de l'axe sont réalisés et disposés de manière à former aussi les éléments d'arrêt prévus au voisinage des extrémités (23b, 23a; 33b, 33a) de ces tôles et destinés à la retenue en position dans la direction de la circonférence.

5. Tambour rotatif selon la revendication 4, caractérisé en ce que les éléments d'arrêt (25) fixés sur l'enveloppe (1) du tambour et destinés à la retenue en position dans la direction de l'axe passent autour des angles des extrémités correspondantes (23b, 23a) des tôles.

6. Tambour rotatif selon les revendications 1 et 2, caractérisé en ce qu'un anneau limiteur (10, 11) prévu sur les deux côtés de la bague de roulement (2) est disposé entre l'élément d'arrêt (4) destiné à la retenue en position de la bague de roulement (2) dans la direction de l'axe et placé sur la tôle d'appui (3) et le côté extrême correspondant (2a, 2b) de la bague de roulement, cet anneau limiteur (10, 11) ayant un diamètre extérieur plus petit que celui de la bague de roulement (2) et disposant d'un faible jeu par rapport aux tôles d'appui (3).

7. Tambour rotatif selon la revendication 6, caractérisé en ce que chaque anneau limiteur (10, 11) comporte pour sa retenue en position dans la direction de la circonférence au moins un élément d'arrêt (10a, 11a) qui pénètre à la manière d'une dent et avec jeu entre deux tôles d'appui (3) qui sont voisines dans la direction de la circonférence.

8. Tambour rotatif selon l'une des revendications précédentes, caractérisé en ce que tous les éléments d'arrêt (5 à 9) fixés sur l'enveloppe (1) du tambour ont une hateur qui correspond approximativement à l'épaisseur des tôles d'appui (3).

9. Tambour rotatif selon l'une des revendications précédentes, caractérisé en ce que les tôles d'appui (3) ont une surface de base rectangulaire au moins dans la zone située sous la bague de roulement (2) et ont une épaisseur constante.

10. Tambour rotatif selon la revendication 9, caractérisé en ce que les tôles d'appui (63) sont élargies aux extrémités (63a, 63b) par rapport à leur partie se trouvant sous la bague de roulement, les éléments d'arrêt (66 à 69) destinés à la retenue en position dans la direction de la circonférence étant disposés sur les côtés longs de ces élargissements.

11. Tambour rotatif selon la revendication 9, caractérisé en ce que l'extrémité (53b ou 53a) de chaque tôle d'appui (53) au voisinage de laquelle sont prévus les éléments d'arrêt (54, 55) destinés à la retenue en position dans la direction de l'axe est plus étroite que le reste de la tôle.

12. Tambour rotatif selon l'une des revendications précédentes, caractérisé en ce que des tôles de compensation sont insérables sous les tôles d'appui par l'extrémité de ces dernières qui est opposée aux éléments d'arrêt destinés à la retenue en position dans la direction de l'axe, ces tôles de compensation étant fixables à ces tôles d'appui.

FIG.1

FIG. 3

## FIG.2

*FIG.4*

*FIG.5*

*FIG.6*

*FIG.7*

*FIG.8*